# EUROPEAN PATENT SPECIFICATION

(11) **EP 2 587 250 B1**
(45) Date of publication and mention of the grant of the patent: **14.03.2018**
(21) Application number: 11797999.7
(22) Date of filing: 13.06.2011
(51) Int. Cl.: G01N 21/51, G01N 35/02, G01N 21/82

(54) **AUTOMATIC ANALYSIS DEVICE**
Automatische Analysevorrichtung
DISPOSITIF D'ANALYSE AUTOMATIQUE

(30) Priority: 22.06.2010 JP 2010141430
(43) Date of publication of application: 01.05.2013
(73) Proprietor: Hitachi High-Technologies Corporation, Tokyo 105-8717 (JP)
(72) Inventor: SHIBA, Masaki, Chiyoda-ku Tokyo 100-8220 (JP); TAMURA, Takuo, Chiyoda-ku, Tokyo 100-8220 (JP); ADACHI Sakuichiro, Kokubunji-shi Tokyo 185-8601 (JP)
(74) Representative: Strehl Schübel-Hopf & Partner
(86) International application number: PCT/JP2011/063443
(87) International publication number: WO 2011/162113

(56) References cited:
- EP-A1- 1 939 607
- WO-A1-2007/037253
- DE-A1- 3 315 456
- JP-A- H07 507 133
- JP-A- H10 503 279
- JP-A- 2000 506 271
- JP-A- 2003 130 784
- JP-A- 2003 139 697
- JP-A- 2004 502 927
- JP-A- 2009 281 930
- US-A1- 2009 046 274
- "Correlation and dependence", Wikipedia, 21 June 2010 (2010-06-21), XP055266957, Retrieved from the Internet: URL:https://en.wikipedia.org/w/index.php?t itle=Special:Book&bookcmd=download&collect ion_id=3a365b7fa0e596d24d3496fceecfba97f4d 9d213&writer=rdf2latex&return_to=Correlati on and dependence [retrieved on 2016-04-20]

## Description

### TECHNICAL FIELD

The present invention relates to an automatic analysis device that irradiates an object to be measured with light and measures light scattered on the object. More specifically, the invention relates to an automatic analysis device including two or more detectors.

### BACKGROUND ART

A sample analysis device analyzes the ingredient amount contained in a sample (specimen or sample). An automatic analysis device is widely used as such a sample analysis device. The automatic analysis device irradiates a sample or a reaction solution that contains a mixture of the sample and a reagent with light from a light source. The automatic analysis device measures the amount of the resulting transmitted light having one or more wavelengths and calculates absorbance. Based on the Lambert-Beer law, the automatic analysis device estimates the ingredient amount according to a relationship between the absorbance and the concentration.

These devices include a cell disk that repeatedly rotates and stops. Many cells containing a reaction solution are circularly arranged on the cell disk. A transmitted light measuring unit of the device is previously provided and measures a time change of the absorbance for approximately ten minutes at a specified time interval while the cell disk rotates.

The automatic analysis device, including a system that measures the amount of transmitted light, uses broadly two types of reactions for reaction solutions, i.e., color reaction between substrate and enzyme and aggregation reaction between antigen and antibody.

The former is biochemical analysis and includes inspection items such as LDH (lactate dehydrogenase), ALP (alkaline phosphatase), and AST (asparate aminotransferase). The latter is immune assay and includes inspection items such as CRP (C-reactive protein), IgG (immunoglobulin G), and RF (rheumatoid factor).

The immune assay measures materials having low blood concentration and therefore requires high sensitivity. There has been an attempt to ensure high sensitivity for the latex agglutination immunoassay. The latex agglutination immunoassay uses a reagent resulting from sensitizing (binding) antibody to the surface of a latex particle to recognize and aggregate ingredients contained in a sample. For this purpose, the latex agglutination immunoassay applies light to a reaction solution and measures the amount of transmitted light not scattered on latex aggregates to determine the amount of ingredients contained in the sample.

There have been attempts to ensure high sensitivity for the automatic analysis device by measuring the amount of scattered light, not the amount of transmitted light. For an example, the system (disclosed in patent document 1) separates transmitted light from scattered light using a diaphragm and simultaneously measures the absorbance and the scattered light. For another example, the configuration (disclosed in patent document 2) improves accuracy at a high-concentration side by measuring the scattered light reflected on a large aggregate formed as a result of advanced aggregation reaction. For still another example, the method (disclosed in patent document 3) uses integrating spheres forward and backward of a reaction container, measures the average intensity of light for each of the forward scattered light and the backward scattered light, and corrects a turbidity change due to the cell position misalignment.

### DOCUMENTS ON PRIOR ARTS

### PATENT DOCUMENTS

Patent Document 1: Japanese Unexamined Patent Application Publication No. 2001-141654 A
Patent Document 2: Japanese Unexamined Patent Application No. 2008-008794 A
Patent Document 3: Japanese Unexamined Patent Application No. 10-332582 A

### DISCLOSURE OF THE INVENTION

### PROBLEMS TO BE SOLVED BY THE INVENTION

In an automatic analysis device which uses a detector to detect the scattered light, a foreign material such as air bubble may mix in an object to be measured or may adhere to the inside of a reaction container or the reaction container may have a flaw, causing a noise component that affects a measurement result.

To decrease the noise effect, there is a method that improves the S/N ratio characteristics by integrating an output from the detector for a specified time. However, the integration time depends on a temporal change of the object to be measured. In addition, the S/N ratio characteristics may not be improved if a foreign material such as air bubble adheres inside the reaction container. Patent document 3 discloses a technology that decreases the S/N ratio by integrating the scattered light and performing an averaging procedure.

A light scattering photometer applies light to an object to be measured and detects the scattered light. In principle, however, it is difficult for such a light scattering photometer to distinguish between the object to be measured and a flaw on the reaction container or an air bubble adhered inside the reaction container.

An air bubble often adheres to a specific location inside the reaction container. A flaw is often found at a specific location of the reaction container as well. Therefore, a highly reliable result may be obtained using a light detection signal of scattered light with less noise components if light scattered in a specific direction can be removed before the concentration calculation.

It is an object of the invention to provide an automatic analysis device which can provide a highly reliable analysis result even if scattered light contains a noise or an intermediate optical path in the optical system includes an obstacle that hinders the scattered light from passing.

### MEANS FOR SOLVING THE PROBLEM

According to the invention as defined in claim 1, an automatic analysis device is provided that measures intensities of scattered light from an object to be measured in a plurality of directions, obtains correlation coefficients between the intensities of the scattered light in the directions, and analyzes the object using the intensities of the scattered light in the directions, the intensities having the correlation coefficient larger than a reference correlation coefficient.

### ADVANTAGEOUS EFFECTS OF THE INVENTION

According to the invention, the intensity of scattered light having a large correlation coefficient is used to analyze an object to be measured. Therefore, a highly reliable measurement result can be obtained and provided for clinical practice.

### BRIEF DESCRIPTION OF THE DRAWINGS

Fig. 1 is a system block diagram illustrating an overall configuration of an automatic analysis device according to an embodiment of the invention;
Fig. 2 is a system configuration diagram illustrating an optical detection system that detects scattered light from an object to be measured in the embodiment of the invention;
Fig. 3 illustrates a measurement result of scattered light detected by light detectors (θ1 and θ2) in the optical detection system in the embodiment of the invention;
Fig. 4 illustrates relationship between signal components and noise components of the scattered light detected by the optical detection system in the embodiment of the invention;
Fig. 5 is a correlation diagram of the scattered light detected by light detectors (θ1 and θ2) having different inclination angles from an axis of transmitted light in the embodiment of the invention;
Fig. 6 is a correlation diagram, similar to Fig. 5, of the scattered light detected by light detectors (θ1 and θ3) in the embodiment of the invention;
Fig. 7 is a correlation diagram, similar to Fig. 5, of the scattered light detected by light detectors (θ1 and θ4) in the embodiment of the invention;
Fig. 8 illustrates averaged light intensity obtained by normalizing the scattered light detected by the light detectors (θ1 and θ2) in the embodiment of the invention;
Fig. 9 illustrates a flow of processing data of the scattered light detected by plural light detectors in the embodiment of the invention; and
Fig. 10 illustrates a setting screen for parameters used for the analysis, displayed on a display device of the automatic analysis device according to the embodiment of the invention.

### DESCRIPTION OF EMBODIMENTS

Embodiments of the present invention will be described below with reference to the drawings.

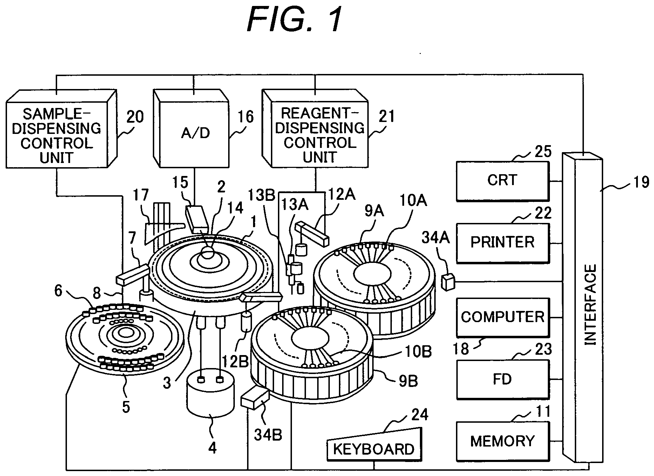

With reference to Figs. 1 to 6, the configuration and operations of an automatic analysis system according to an embodiment of the invention will be described.

First, with reference to Fig. 1, an overall configuration of the automatic analysis system according to the embodiment will be described. Fig. 1 is a systemblock diagram illustrating the overall configuration of the automatic analysis system according to the embodiment of the invention.

Fig. 1 illustrates an overall configuration of the automatic analysis device. A reaction disk 1 is provided to rotate intermittently. Many reaction containers 2 made of a transparent material are attached along the periphery of the reaction disk 1. A constant temperature reservoir 3 maintains the reaction container 2 at a pre-determined temperature (37°C. for example). A thermostat 4 controls the temperature of a fluid in the constant temperature reservoir 3.

Many sample containers 6 are placed on a sample disk 5, the sample containers containing a biological sample such as blood or urine. A pipette nozzle 8 is attached to a movable arm 7 and draws up a pre-determined amount of sample from the sample container 6 located at a suction position of the sample disk 5. The pipette nozzle 8 then discharges the sample into the reaction container 2 at a discharge position on the reaction disk 1.

A reagent disk is placed in each of reagent cool boxes 9A and 9B. Reagent bottles 10A and 10B are placed on the reagent disk and are provided with a label indicating reagent identification information, such as a bar code. The reagent bottles contain reagent solutions corresponding to analysis items analyzed by an analysis device. Bar code readers 34A and 34B are provided for the reagent cool boxes 9A and 9B, respectively, and read a bar code on the outer wall of each reagent bottle to register the reagent. The read reagent information is stored as well as the position on the reagent disk in memory 11 to be described later.

A pipette nozzle for reagent is provided for each of reagent dispensing mechanisms 12A and 12B, drawing up a reagent solution from a reagent bottle which is located at a reagent entry position on the reaction disk 1 and corresponds to the inspection item and then discharging the reagent solution into the corresponding reaction container 2.

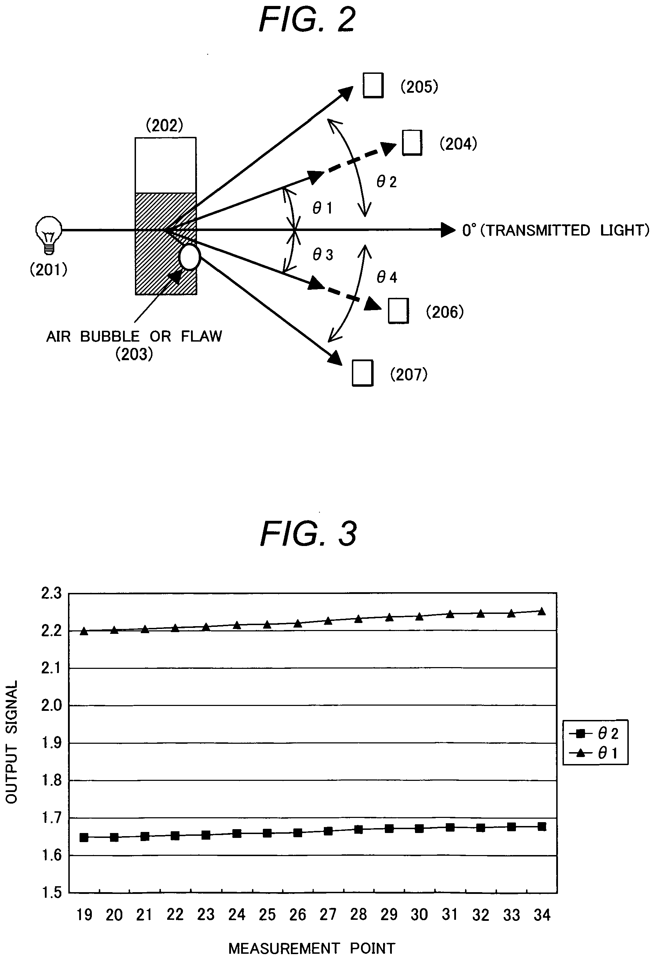

Stirring mechanisms 13A and 13B stir a mixture of the sample and the reagent contained in the reaction container 2. A series of reaction containers 2 circularly moves to pass through a photometric position between a light source 14 and a light scattering photometer 15. The light scattering photometer 15 may be provided with a multi-wavelength absorption photometer along a coaxial light axis. The light scattering photometer 15 may perform concentration operation using both scattered light and transmitted light. The light source 14 and the light scattering photometer 15 configure an optical detection system. Placement of a light detector in the light scattering photometer 15 will be described with reference to Fig. 2.

The reaction solution of sample and reagent in each reaction container 2 is photometrically measured each time the reaction container 2 passes before the light scattering photometer 15 while the reaction disk 1 rotates. The scattered light is measured for each sample and the analog signal of the scattered light is input to an A/D converter 16. A reaction container cleaning mechanism 17 is provided near the reaction disk 1 and cleans the inside of the used reaction container 2. This enables the reaction container to be reused.

Next, a control system and a signal processing system of the analysis device in Fig. 1 will be briefly described.

A computer 18 is connected to a sample-dispensing control unit 20, a reagent-dispensing control unit 21, and the A/D converter 16 via an interface 19. The computer 18 sends an instruction to the sample-dispensing control unit 20 to control sample-dispensing operation. The computer 18 sends an instruction to the reagent-dispensing control unit 21 to control reagent-dispensing operation.

The computer 18 receives a photometric value as a digital signal converted by the A/D converter 16.
The interface 19 is connected with a printer 22 for printing, memory 11 and an external output medium 23 as storage devices, a keyboard 24 for entering operational instructions, and a CRT display (display device) 25 for screen display. The display device may be a liquid crystal display as well as a CRT display. The memory 11 includes hard disk memory or external memory, for example . The memory 11 stores information such as passwords for operators, display levels for each screen, analysis parameters, content of requested analysis items, calibration results, and analysis results.

An analysis operation of sample in the automatic analysis device in Fig. 1 will be described below.

Analysis parameters concerning items the automatic analysis device can analyze is input using an information input apparatus such as the keyboard 24 and stored in the memory 11 in advance. An operator selects an inspection item requested for each sample using an operation function screen to be described later.

Information such as a patient ID is also input from the keyboard 24. To analyze the inspection item specified for each sample, the pipette nozzle 8 dispenses a pre-determined amount of sample from the sample container 6 to the reaction container 2 according to the analysis parameters.

The reaction container containing the sample is transported through the rotation of the reaction disk 1 and stops at the reagent entry position. The pipette nozzles of the reagent dispensing mechanisms 12A and 12B dispense a pre-determined amount of reagent solution into the reaction container 2 according to an analysis parameter for the corresponding inspection item. The sample and the reagent may be dispensed in the reverse order of this example, namely, the reagent is dispensed before the sample is.

The stirring mechanisms 13A and 13B stir and mix the sample and the reagent. When the reaction container 2 passes through the photometric position, the light scattering photometer 15 measures the scattered light from the reaction solution. The A/D converter 16 converts the measured scattered light into a numeric value proportionate to the light intensity. The numeric value is supplied to the computer 18 via the interface 19.

The converted numeric value is further converted into concentration data based on a standard curve previously measured according to an analysis method specified for each inspection item. The printer 22 or the screen of the CRT 25 outputs ingredient concentration data as an analysis result of each inspection item.

Before the above-mentioned measurement operation is performed, the operator specifies various parameters and registers specimens needed for the analysis measurement through the operation screens on the CRT 25. The operator learns an analysis result after the measurement using the operation screens on the CRT 25.

With reference to Fig. 2, the configuration of the light source 14 and the light scattering photometer 15 in Fig. 1 will be described in detail.

Fig. 2 is a system block diagram illustrating an overall configuration of the light source, the reaction container, and the light scattering photometer.

The light from a light source 201 enters a reaction container 202 that contains the dispensed object to be measured. The object to be measured includes the reaction container 202. The light scattering photometer 15 detects the scattered light from the object to be measured.

The light scattering photometer 15 includes four light detectors (204, 205, 206, and 207). Photodiodes are used for the light detectors. The four light detectors (204, 205, 206, and 207) are placed at different inclinations against an axis of the transmitted light (angle 0°) which is an extension of the axis of the incident light.

The light detector 204 has inclination θ1. For example, any angle between 30° and 20° may be selected for the inclination θ1. The light detector 205 has inclination θ2 greater than θ1. Any angle between 30° and 20° may be selected for an angular difference between θ2 and θ1.

The light detector 206 has inclination θ3. For example, any angle between -30° and -20° may be selected for the inclination θ3.

The light detector 207 has inclination θ4. The light detector 207 has inclination θ4 greater than θ3. For example, any angle between 30° and 20° may be selected for the inclination θ3. The light detectors are placed at different inclinations in the Z-axis direction against the axis of the incident light. The light detectors may be placed at different angles in the X-axis or Y-axis direction against the axis of the incident light or oblique to the axis of the incident light. The light detectors may be placed contiguously instead of dispersedly.

The incident light collides against the object to be measured in the reaction container 202 and scatters. The light detector 204 (θ1), the light detector 205 (θ2), the light detector 206 (θ3), and the light detector 207 (θ1) detect the scattered light. During the detection, if an air bubble or flaw 203, for example, exists in intermediate paths between the reaction container and the light detectors, the scattered light received by the light detector 207 positioned at θ4 against the axis of transmitted light (0°) is influenced.

With reference to Fig. 3, measurement of output signals is described below.

The graph represents a reaction process shown by the relationship between measurement points (horizontal axis) and output signals (vertical axis) which are the scattered light detected by the light detectors 204 to 205.

This reaction process is plural plots of a reaction progress over time from the beginning to the end of the measurement to detect the object to be measured at each time the reaction container, which is placed along the circumference of the reaction disk, passes before the photometer at a pre-determined time interval. In this example, the reaction process is represented by the output signals of the light detectors (204 and 205) with a time course period from a measurement point 19 to a measurement point 34. The measurement points indicate the numbers of sequence of detection by the photometer. As the number of the measurement point increases, the lapse of time increases. The time course period can be selected by any measurement points or any period range.

Generally, the amount of scattered light decreases as the inclination angle against the axis of transmitted light increases. In Fig. 3, the amount of scattered light as output values is large for the light detector 204 (θ1 with a small inclination angle) and is small for the light detector 205 (θ2 with a large inclination angle).

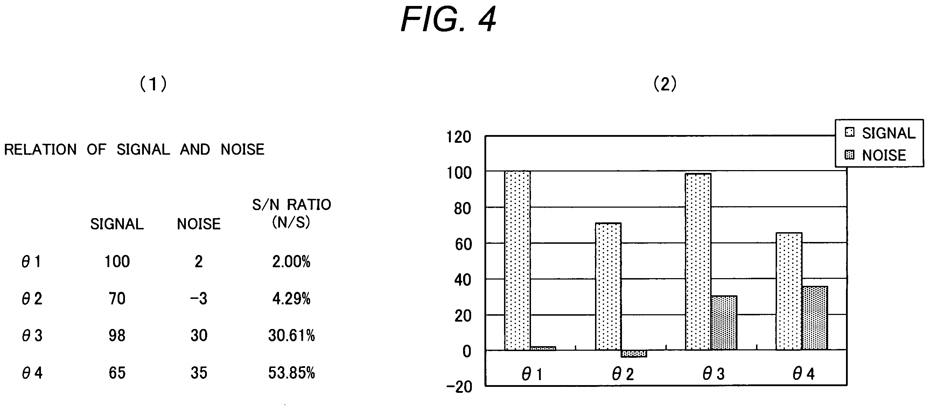

With reference to Fig. 4, a signal and a noise detected by the light detectors will be described below.

Fig. 4 schematically illustrates a relationship between signal components (scattered light from the proper object to be measured) and noise components (randomly generated components) in the signals of the light received by the light detectors.

The signal value of the scattered light received by the light detector is equal to the sum of the signal components and the noise components. When the signal components are represented by a numeric value of 100±α in an ideal condition, for example, any one of the light detectors should receive a signal of the scattered light of 100±α from the same object to be measured. On the other hand, the noise components may indicate a positive or negative value because the noise components randomly affect a signal of the scattered light received by the light detectors. If the light detectors are of different types, the placement of the light detectors or difference between the light detectors affects the noise components.

The signal component may vary if some factor, such as the air bubble or flaw 203 on the reaction container as illustrated in Fig. 3, obstacles the scattered light in a specific direction.

As can be seen from numeric values (1) and a graph (2) in Fig. 4, the light detectors (204 and 205) provide low S/N ratios. The light detectors (206 and 207) provide high S/N ratios and are considered to be greatly affected by noise.

Next, the correlation between intensities of the scattered light detected by the light detectors will be described.

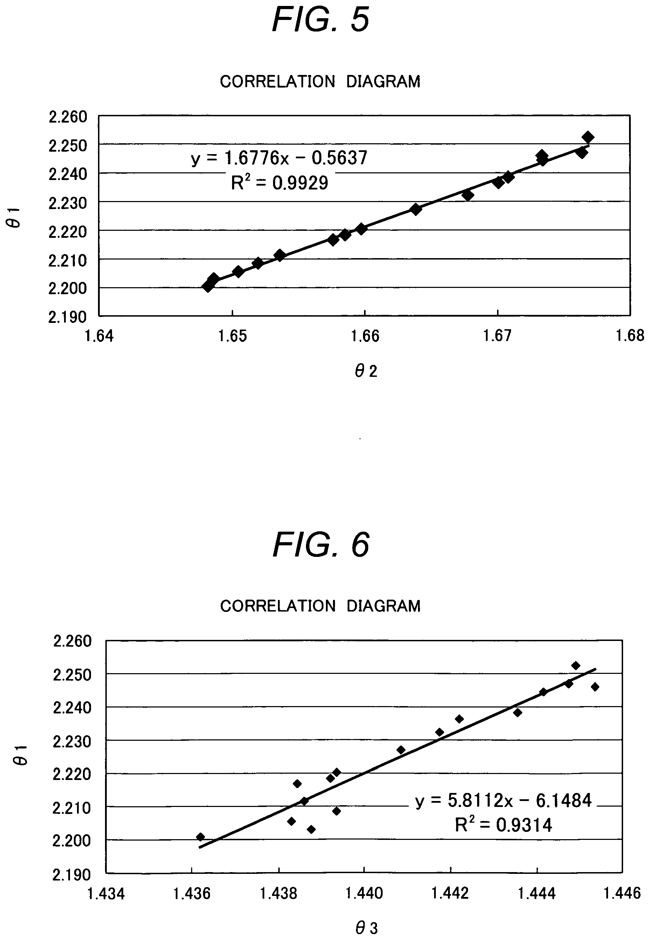

Fig. 5 illustrates a correlation between intensities of the scattered light detected by the light detector 204 (θ1) and the light detector 205 (θ2). The correlation is calculated based on the output signals (from the light detector 204 (θ1) and the light detector 205 (θ2)) of the scattered light illustrated in Fig. 3.

The least-square method is used to calculate a linear regression curve (straight line) based on a regression curve of the intensities of the scattered light detected by the light detector 204 (θ1) and the light detector 205 (θ2). An equation y = 1.6776x - 0.5637 represents the linear regression curve (straight line). In addition, a correlation is calculated between the intensities of the scattered light detected by the light detector 204 (θ1) and the light detector 205 (θ2) to calculate R², statistically known as a contribution ratio, and a slope and an intercept of the regression line. The contribution ratio R2 corresponds to a correlation coefficient. The slope and the intercept are coefficients of the regression line.

The correlation coefficient of the intensities of the scattered light detected by the light detector 204 (θ1) and the light detector 205 (θ2) is 0.9929, which is close to 1 and indicates a high correlation.

Fig. 6 illustrates a correlation between intensities of the scattered light detected by the light detector 204 (θ1) and the light detector 206 (θ3). The correlation coefficient (R²) is 0.9314 based on the intensities of the scattered light detected by the light detector 204 (θ1) and the light detector 206 (θ3). It can be understood that the correlation between the light detector 204 (θ1) and the light detector 206 (θ3) is lower than the correlation between the light detector 204 (θ1) and the light detector 205 (θ2).

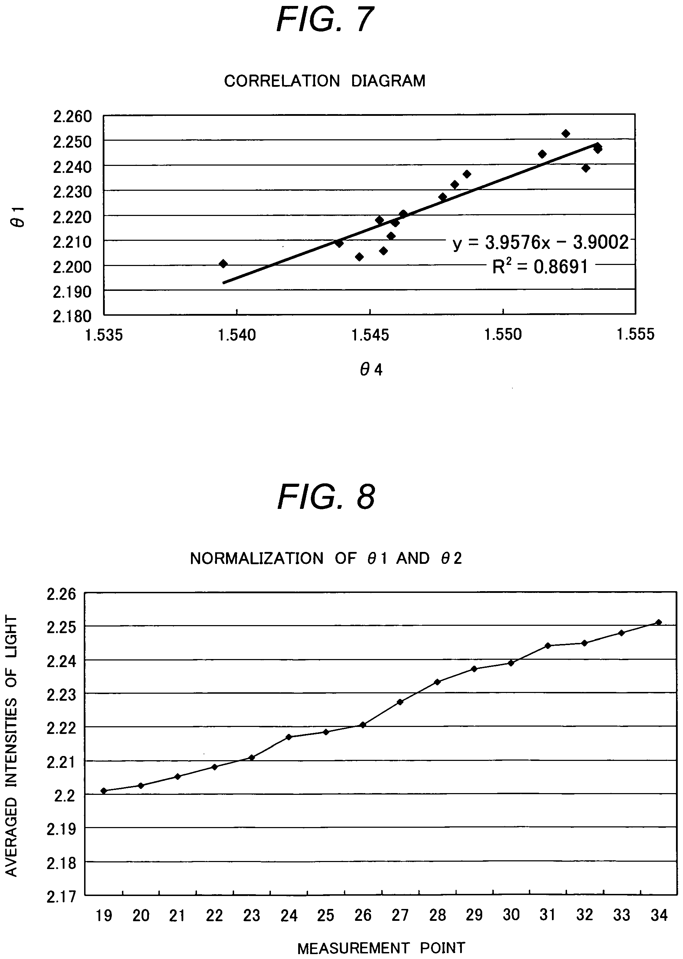

Fig. 7 illustrates correlation between intensities of the scattered light detected by the light detector 204 (θ1) and the light detector 207 (θ4). The correlation coefficient (R²) is 0.8691 based on the intensities of the scattered light detected by the light detector 204 (θ1) and the light detector 207 (θ4). It can be understood that the correlation between the light detector 204 (θ1) and the light detector 207 (θ4) is much lower than the correlation between the light detector 204 (θ1) and the light detector 206 (θ3).

As described above, the correlation between the light detector 204 (θ1) and the light detector 207 (θ4) and the correlation between the light detector 204 (θ1) and the light detector 206 (θ3) are lower than the correlation between the light detector 204 (θ1) and the light detector 205 (θ2). It is considered this result is caused by effects of obstacles such as a noise in the scattered light and an air bubble or a flaw in an intermediate path where the light passes in the optical detection system.

A highly reliable result of concentration analysis can be obtained and provided for clinical practice by excluding the scattered light highly affected by a noise, air bubble, or flaw and performing concentration analysis on a sample using a detection signal from the light detector 204 (θ1) and the light detector 205 (θ2) which detect the scattered light hardly affected by a noise, air bubble, or flaw.

The light detector 204 (θ1) is used as a reference light detector to observe the correlation. Any other light detector than the light detector 204 (θ1) may be selected as the reference light detector. It is desirable to select a reference light detector that stably detects the scattered light and is hardly affected by a noise, air bubble, or flaw. For this purpose, the reference light detector is set to have an appropriate inclination angle to stably detect the scattered light and prevent effects of a noise, air bubble, or flaw.

With reference to Fig. 8, normalization of the output results (the intensities of the scattered light) detected by the light detector 204 (θ1) and the light detector 205 (θ2) will be described below.

Fig. 8 illustrates normalization of the output results. The horizontal axis represents measurement points. The vertical axis represents averaged intensities of the light. The measurement points and the averaged intensities of the light in Fig. 8 correspond to the measurement points (horizontal axis) and the output signals (vertical axis) in Fig. 3, respectively.

In an example of Fig. 8, an output value in the direction of θ1 (the light detector 204) and an output result in the direction of θ2 (the light detector 205) is normalized by using the above-mentioned coefficient (gradient and intercept) of the regression line and normalizing the output result of one light detector to the output result of the other light detector (a specific light detector).

Although the regression line is used in the example of Fig. 8, any equation may be used because the normalization is performed by calculating an equation representing a correlation between data of the intensities of the scattered light measured at plural angles, such as quadratic or a cubic. Preferably, the light detector detects and incorporates the scattered light at plural timing points.

As described above, highly precise and reliable analysis results can be obtained by performing the concentration analysis by using a standard curve of which the averaged intensities of the light are previously measured, the averaged intensities of the light being obtained by normalizing the intensities of the scattered light detected by plural light detectors which are strongly correlated with each other.

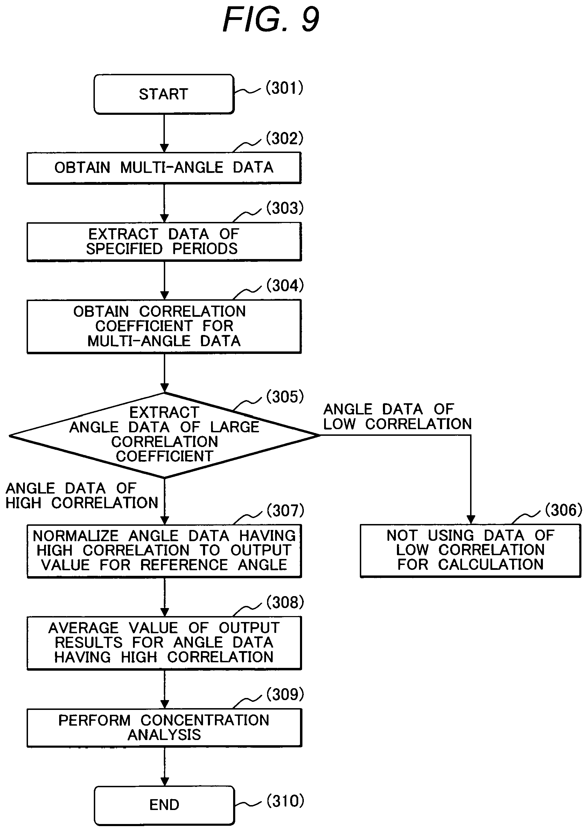

With reference to Fig. 9, a flow of processing data of the scattered light described referring to Figs. 1 to 8 will be described below.

The automatic analysis device starts concentration analysis (step 301). Then, the light detectors (204, 205, 206, and 207) obtain multi-angle data with different inclinations (detect the scattered light) (step 302).

At step 302, the light detectors (204, 205, 206, and 207) detect a change in the intensity of scattered light in terms of data of the concentration that varies reaction with time over a wide range including the measurement points 19 to 34. Data of specified periods is extracted from the wide range of the measurement points (step 303).

Any part of the range needed for the concentration analysis is selected to extract the data of the specified periods. Any of the measurement points where the reaction varies with time can be selected with any part of the range. Therefore, the concentration analysis can be performed appropriately as needed.

A correlation coefficient is obtained for data at a high angle from the intensities of the scattered light detected by the light detectors (204, 205, 206, and 207) selected at step 303 (step 304). As described above, the correlation is higher as the correlation coefficient (contribution ratio R²) is closer to 1. The correlation is lower as the correlation coefficient is closer to 0.

Data of a large correlation coefficient is extracted based on the correlation coefficient at step 304 (step 305). In this extraction process, the intensities of the scattered light of the light detectors (204 and 205) having large correlation coefficients are selected from the intensities of the scattered light detected by the light detectors (204, 205, 206, and 207) . The process excludes the intensities of the scattered light having correlation coefficients smaller than a reference correlation coefficient (a threshold value) previously entered by an operator, selecting the intensities of the scattered light having large correlation coefficients.

The reference correlation coefficient is at least approximately 0.94. If the reference correlation coefficient is set to 0.9300, the intensities of the scattered light detected by the light detector 206 are not excluded and are selected as the intensities of the scattered light having large correlation coefficients. It is desirable to appropriately define a value of the reference correlation coefficient according to the accuracy level needed for the concentration analysis.

Angle data decided to have low correlation at step 305 is not used for the concentration analysis (step 306). On the other hand, angle data decided to have high correlation is normalized to an output value for a reference angle (step 307) . As described above, the normalization process normalizes the data to values of the intensities of the scattered light detected by the specific light detector using the coefficient (slope and intercept) of the regression line calculated simultaneously with the correlation coefficient (contribution ratio R²).

The normalized scattered light is averaged (step 308). The concentration analysis is performed on the averaged intensities of the scattered light (step 309). The data processing is terminated (step 310).

Setting of parameters for the concentration analysis will be described below.

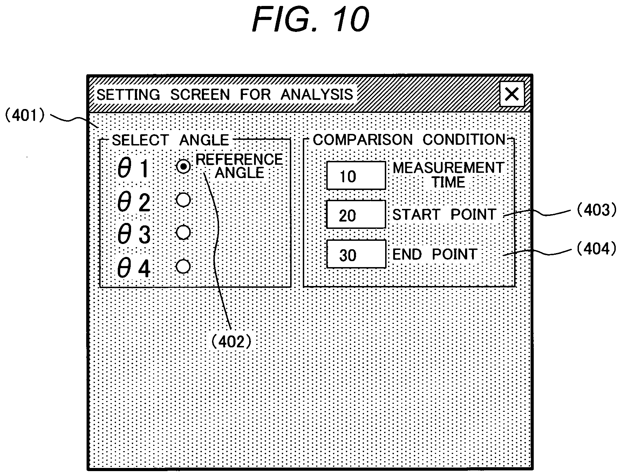

Fig. 10 illustrates a setting screen for parameters used for the concentration analysis. The CRT display (display device) 25 displays this setting screen.

As described above, in the concentration analysis, the intensities of the scattered light from an object to be measured are measured and obtained in plural directions (at plural angles), reliable data being selected from the obtained data of the intensities of the scattered light and being normalized to values of the scattered light at a specified angle.

As illustrated in Fig. 10, a reference angle (402) for normalizing the scattered light is selected from a selection screen (401) for angles (θ1, θ2, θ3, and θ4) in the setting screen for analysis parameters. This enables to normalize the scattered light from other angles with reference to the scattered light from any angle.

A period for comparing correlations in data of the reaction process can be specified by setting a start point (403) to start the comparison and an end point (404) to end the comparison. This enables the concentration analysis to be set on a setting screen for analysis conditions of the automatic analysis device. It is desirable to select the start point (403) and the end point (404) for any time course period in consideration of the accuracy level required of the concentration analysis and the reaction process of a time-varying sample.

The conditions of the concentration analysis are not always specified from the setting screen of the automatic analysis device. If the conditions are constant, they may be specified using parameters previously stored in a storage area of the automatic analysis device.

### EXPLANATION OF REFERENCE CHARACTERS

1 -- reaction disk
2 -- reaction container
3 -- constant temperature reservoir
4 -- thermostat
5 -- sample disk
6 -- sample container
7 -- movable arm
8 -- pipette nozzle
9A, 9B -- reagent cool box
12A, 12B -- pipette nozzle for reagent
15 -- light scattering photometer
18 -- computer
19 -- interface
204 -- light detector (θ1)
205 -- light detector (θ2)
206 -- light detector (θ3)
207 -- light detector (θ4)
201 -- light source
202 -- reaction container
203 -- air bubble or flaw

## Claims

1. An automatic analysis device configured to perform concentration analysis of an ingredient contained in a sample by measuring an intensity of scattered light upon irradiating a mixture of the sample and a reagent located in a reaction container (2; 202), the automatic analysis device comprising:
- a light source (14) configured to irradiate the reaction container (2; 202) and the mixture with light;
- a plurality of light detectors (204, 205, 206, 207) configured to detect the scattered light from the reaction container (2; 202) and the mixture; and
- a computer (18) configured to obtain and process data of the scattered light, wherein the scattered light is detected multiple times by each of the plurality of light detectors (204, 205, 206, 207);
wherein each of the light detectors (204, 205, 206, 207) has a different inclination angle against an axis of transmitted light passing through the mixture, and wherein one of said light detectors (204) among the plurality of light detectors (204, 205, 206, 207) is selected a reference, **characterized in that** the computer (18) is configured to:
- obtain correlation coefficients (R²) between intensities of scattered light detected by the light detector (204) selected as the reference and intensities of the scattered light detected by the other light detectors (205, 206, 207), based on regression curves between intensities of scattered light detected by the light detector (204) selected as the reference and intensities of the scattered light detected by the other light detectors (205, 206, 207), and
- perform a concentration analysis of the mixture using the intensities of the scattered light having a large correlation coefficient excluding an intensity of the scattered light having a correlation coefficient smaller than a reference correlation coefficient preliminarily inputted to the computer (18).

2. The automatic analysis device according to claim 1, wherein inclination directions of the plurality of light detectors (204, 205, 206, 207) with different inclination angles (e1, e2, e3) are up and down, right and left, or oblique to the axis of the transmitted light.

3. The automatic analysis device according to claim 2, wherein the computer is further configured to normalize values of the intensities of the scattered light detected by a specific light detector using a coefficient of a regression line calculated in obtaining the correlation coefficient of the intensities of the scattered light having the large correlation coefficient.

4. The automatic analysis device according to claim 3, comprising:
a display device (25) configured to display various screens including an operation screen and a setting screen, wherein the setting screen displays a parameter to be selected,
wherein said parameter is used for selecting the light detector (204) among the plurality of light detectors (204, 205, 206, 207) as the reference and/or the parameter is used for selecting a time course period within a range of measured time course.

5. The automatic analysis device according to one of claims 1 to 4, wherein, as inclination angles (e1, e2, e3, e4) against an axis of transmitted light (0°) passing through the mixture:
- a first inclination angle (e1) for a first light detector (204) is selected between 30° and 20°,
- a second inclination angle (e2) for a second light detector (205) is selected between 60° and 40°,
- a third inclination angle (e3) for a third light detector (206) is selected between -30° and -20°, and
- a fourth inclination angle (e4) for a fourth light detector (207) is selected between -60° and -40°.

## Patentansprüche

1. Automatische Analysevorrichtung, die dazu ausgelegt ist, eine Konzentrationsanalyse eines in einer Probe enthaltenen Inhaltsstoffs durchzuführen, indem sie eine Intensität von gestreutem Licht aufgrund der Bestrahlung einer Mischung aus der Probe und eines in Reaktanden misst, welche in einem Reaktionsbehälter (2, 202) angeordnet ist, wobei die automatische Analysevorrichtung umfasst:
- eine Lichtquelle (14), die dazu ausgelegt ist, den Reaktionsbehälter (2, 202) und die Mischung mit Licht zu bestrahlen;
- eine Mehrzahl von Lichtdetektoren (204, 205, 206, 207), die dazu ausgelegt sind, das von dem Reaktionsbehälter (2, 202) und der Mischung gestreute Licht zu detektieren;
- einen Computer (18), der dazu ausgelegt ist, Daten des gestreuten Lichts zu ermitteln und zu verarbeiten, wobei das gestreute Licht mehrfach von jedem der Mehrzahl von Lichtdetektoren (204, 205, 206, 207) detektiert wird;
wobei jeder der Lichtdetektoren (204, 205, 206, 207) einen unterschiedlichen Neigungswinkel gegenüber einer Achse des durch die Mischung gestrahlten Transmissionslichts hat und wobei einer der Lichtdetektoren (204) aus der Mehrzahl von Lichtdetektoren (204, 205, 206, 207) als Referenz ausgewählt wird,
**dadurch gekennzeichnet, dass** der Computer (18) dazu ausgelegt ist:
- Korrelationskoeffizienten (R²) zwischen Intensitäten des von dem als Referenz ausgewählten Lichtdetektor (204) detektierten gestreuten Lichts und Intensitäten des von den anderen Lichtdetektoren (205, 206, 207) detektierten gestreuten Lichts abhängig von Regressionskurven zwischen Intensitäten des von dem als Referenz ausgewählten Lichtdetektor (204) detektierten gestreuten Lichts und Intensitäten des von den anderen Lichtdetektoren (205, 206, 207) detektierten gestreuten Lichts zu ermitteln, und
- eine Konzentrationsanalyse der Mischung unter Verwendung der Intensitäten des gestreuten Lichts mit großen Korrelationskoeffizienten durchzuführen, wobei eine Intensität von gestreutem Licht, welches einen Korrelationskoeffizienten hat, der kleiner als ein vorab in den Computer (18) eingegebener Korrelationskoeffizient ist, ausgeschlossen wird.

2. Automatische Analysevorrichtung nach Anspruch 1,
wobei Neigungsrichtungen der Mehrzahl von Lichtdetektoren (204, 205, 206, 207) mit unterschiedlichen Neigungswinkeln (e1, e2, e3) nach oben und unten, rechts und links oder schräg im Verhältnis zu der Achse des Transmissionslichts gerichtet sind.

3. Automatische Analysevorrichtung nach Anspruch 2,
wobei der Computer ferner dazu ausgelegt ist, die Werte der Intensitäten des von einem speziellen Lichtdetektor detektierten gestreuten Lichts zu normieren, indem ein Koeffizient einer Regressionslinie verwendet wird, die dadurch berechnet wird, dass der Korrelationskoeffizient der Intensitäten des gestreuten Lichts mit großem Korrelationskoeffizienten ermittelt wird.

4. Automatische Analysevorrichtung nach Anspruch 3, umfassend:
eine Displayvorrichtung (25), die dazu ausgelegt ist,
verschiedene Bildschirme darzustellen, welche einen Betriebsbildschirm und einen Einstellungsbildschirm umfassen,
wobei der Einstellungsbildschirm einen auszuwählenden Parameter darstellt,
wobei dieser Parameter zur Auswahl des Lichtdetektors (204) aus der Mehrzahl von Lichtdetektoren (204, 205, 206, 207) als Referenz genutzt wird und/oder dieser Parameter zur Auswahl einer Zeitspanne innerhalb einer Messzeitspanne genutzt wird.

5. Automatische Analysevorrichtung nach einem der Ansprüche 1 bis 4, wobei als Neigungswinkel (e1, e2, e3, e4) gegenüber der Achse des Trasnmissionslichts (0°), welches die Mischung durchstrahlt:
- ein erster Neigungswinkel (e1) für einen ersten Lichtdetektor (204) zwischen 30° und 20° gewählt ist,
- ein zweiter Neigungswinkel (e2) für einen zweiten Lichtdetektor (205) zwischen 60° und 40° gewählt ist,
- ein dritter Neigungswinkel (e3) für einen dritten Lichtdetektor (206) zwischen -30° und -20° gewählt ist, und
- ein vierter Neigungswinkel (e4) für einen vierten Lichtdetektor (204) zwischen -60° und -40° gewählt ist.

## Revendications

1. Dispositif d'analyse automatique configuré pour effectuer une analyse de concentration d'un ingrédient contenu dans un échantillon en mesurant une intensité de lumière diffusée à l'éclairage d'un mélange de l'échantillon et d'un réactif disposé dans un récipient (2 ; 202) de réaction, le dispositif d'analyse automatique comprenant :
- une source (14) de lumière configurée pour éclairer le récipient (2 ; 202) de réaction et le mélange avec une lumière ;
- une pluralité de détecteurs (204, 205, 206, 207) de lumière configurés pour détecter la lumière diffusée depuis le récipient (2 ; 202) de réaction et le mélange ; et
- un ordinateur (18) configuré pour obtenir et traiter des données de la lumière diffusée, dans lequel la lumière diffusée est détectée un nombre multiple de fois par chacun de la pluralité de détecteurs (204, 205, 206, 207) de lumière ;
dans lequel chacun des détecteurs (204, 205, 206, 207) de lumière a un angle d'inclinaison différent par rapport à un axe de lumière transmise passant à travers le mélange, et dans lequel un desdits détecteurs (204) de lumière parmi la pluralité de détecteurs (204, 205, 206, 207) de lumière est sélectionné comme une référence,
**caractérisé en ce que** l'ordinateur (18) est configuré pour :
- obtenir des coefficients de corrélation (R²) entre des intensités de lumière diffusée détectées par le détecteur (204) de lumière sélectionné comme la référence et des intensités de la lumière diffusée détectées par les autres détecteurs (205, 206, 207) de lumière, sur la base de courbes de régression entre des intensités de lumière diffusée détectées par le détecteur (204) de lumière sélectionné comme la référence et des intensités de la lumière diffusée détectées par les autres détecteurs (205, 206, 207) de lumière, et
- exécuter une analyse de concentration du mélange en utilisant les intensités de la lumière diffusée ayant un coefficient de corrélation élevé en excluant une intensité de la lumière diffusée ayant un coefficient de corrélation plus petit qu'un coefficient de corrélation de référence entré au préalable dans l'ordinateur (18).

2. Dispositif d'analyse automatique selon la revendication 1,
dans lequel des directions d'inclinaison de la pluralité de détecteurs (204, 205, 206, 207) de lumière avec des angles d'inclinaison (e1, e2, e3) différents sont haut et bas, droite et gauche, ou obliques par rapport à l'axe de la lumière transmise.

3. Dispositif d'analyse automatique selon la revendication 2,
dans lequel l'ordinateur est en outre configuré pour normaliser des valeurs des intensités de la lumière diffusée détectées par un détecteur de lumière spécifique en utilisant un coefficient d'une ligne de régression calculé en obtenant le coefficient de corrélation des intensités de la lumière diffusée ayant le coefficient de corrélation élevé.

4. Dispositif d'analyse automatique selon la revendication 3, comprenant :
un dispositif (25) d'affichage configuré pour afficher divers écrans incluant un écran d'opération et un écran de paramétrage, dans lequel l'écran de paramétrage affiche un paramètre à sélectionner,
dans lequel ledit paramètre est utilisé pour sélectionner le détecteur (204) de lumière parmi la pluralité de détecteurs (204, 205, 206, 207) de lumière comme la référence et/ou le paramètre est utilisé pour sélectionner une période de décours temporel à l'intérieur d'une plage de décours temporel mesuré.

5. Dispositif d'analyse automatique selon l'une des revendications 1 à 4, dans lequel, comme des angles d'inclinaison (e1, e2, e3, e4) par rapport à un axe de lumière transmise (0°) passant à travers le mélange :
- un premier angle d'inclinaison (e1) pour un premier détecteur (204) de lumière est sélectionné entre 30° et 20°,
- un deuxième angle d'inclinaison (e2) pour un deuxième détecteur (205) de lumière est sélectionné entre 60° et 40°,
- un troisième angle d'inclinaison (e3) pour un troisième détecteur (206) de lumière est sélectionné entre -30° et -20°, et
- un quatrième angle d'inclinaison (e4) pour un quatrième détecteur (207) de lumière est sélectionné entre -60° et -40°.
